# FASCICULE DE BREVET EUROPEEN

(11) **EP 1 578 644 B1**
(45) Date de publication et mention de la délivrance du brevet: **24.05.2006**
(21) Numéro de dépôt: 03799678.2
(22) Date de dépôt: 19.12.2003
(51) Int. Cl.: B60R 16/02

(54) **SYSTEME DE PASSAGE DE CABLAGE ENTRE CAISSE ET PORTE D'UN VEHICULE AUTOMOBILE, ET VEHICULE EQUIPE DE CE SYSTEME**
DURCHFÜRHUNGSVORRICHTUNG FÜR LEITUNGEN ZWISCHEN DER KAROSSERIE UND DER TÜR EINES FAHRZEUGS UND FAHRZEUG MIT DIESER VORRICHTUNG
SYSTEM FOR PASSING CABLES BETWEEN THE BODY AND A DOOR OF A MOTOR VEHICLE, AND VEHICLE COMPRISING SAID SYSTEM

(30) Priorité: 31.12.2002 FR 0216937
(43) Date de publication de la demande: 28.09.2005
(73) Titulaire: Renault s.a.s., 92100 Boulogne Billancourt (FR)
(72) Inventeur: DELAINE Christophe, F-78770 Thoiry (FR)
(74) Mandataire: Davies, Owen Robert Treharne
(86) Numéro de dépôt international: PCT/FR2003/003853
(87) Numéro de publication internationale: WO 2004/062969

(56) Documents cités:
- DE-C- 3 500 359
- FR-A- 2 569 146
- PATENT ABSTRACTS OF JAPAN vol. 2000, no. 10, 17 novembre 2000 (2000-11-17) -& JP 2000 195357 A (YAZAKI CORP), 14 juillet 2000 (2000-07-14)

## Description

La présente invention concerne un système de passage de câblage entre la caisse et une portière d'un véhicule automobile.

Elle s'adresse plus particulièrement mais non limitativement aux passages de câblage qui doivent être réalisés entre un montant latéral central d'une automobile comportant deux portes latérales, et la porte latérale arrière qui est articulée sur ce montant, encore appelé "pied-milieu".

Il est bien connu de devoir assurer entre la caisse d'un véhicule et une portière, le passage des conducteurs électriques, nécessaires pour le fonctionnement de certains équipements, tels que par exemple des moteurs de lève-vitres électriques, ou des systèmes de verrouillage de porte. Généralement, ces câbles sont guidés et protégés par une gaine en un matériau souple reliant de manière étanche des parois respectives de la caisse et de la portière, ces parois étant sensiblement en face l'une de l'autre, au niveau du chant de la portière. La gaine peut se déformer en flexion pour absorber les différences d'écartement entre les dites parois lors du pivotement de la portière, et a à cette fin une forme de boucle en U telle que la gaine se loge entre les deux dites parois quand la portière est fermée, dans un logement prévu à cette fin dans la caisse, et ce U s'écartant lorsque la portière est ouverte. La gaine est classiquement formée d'une sorte de tube annelé en caoutchouc, qui lui confère la souplesse en flexion requise.

Pour limiter le débattement nécessaire de la gaine et donc réduire sa longueur, ce passage de câbles est couramment situé à un niveau où la variation d'écartement entre les parois où les extrémités de la gaine sont fixées est minimale, et donc classiquement à un niveau sensiblement médian sur la hauteur de la portière, compte tenu du galbe habituel des portières et de l'emplacement des charnières de pivot.

Mais des évolutions de la structure de nouveaux véhicules ont entraîné des modifications du dit pied-milieu, celui-ci étant notamment moins large. De plus, pour des raisons de sécurité touchant à l'utilisation d'éléments transversaux de la structure des portières, situés sensiblement à mi-hauteur de portière, et visant à empêcher ou limiter des déformations des parois latérales de la caisse, les ouvertures ménagées dans les dites parois de chant de portière pour permettre le passage des câbles ont dû être déplacées vers le bas de la portière alors qu'elles se trouvaient à mi-hauteur comme indiqué ci-dessus. Une conséquence est que le débattement requis se trouve augmenté, ce qui impliquerait de devoir augmenter la longueur de la gaine. Mais alors se pose un problème d'encombrement, par manque de place pour loger cette gaine rallongée entre portière et pied-milieu quand la portière est fermée, et de plus, la boucle plus longue formée par la gaine conduit à risque d'écrasement de celle-ci lors de la fermeture de la portière.

Le document JP-2000-195357 décrit un soufflet de protection d'un faisceau de câble, agencé de manière a être extensible. Il y a un mode de réalisation ou le faisceau de câbles peut coulisser à l'intérieur de la gaine et présente un longueur de celle-ci.

Le document DE-3500359 sur lequel le préambule de la revendication est basé décrit une gaine en soufflet de longueur variable, agencée de manière à permettre le coulissement des câbles du côté caisse.

La présente invention a pour but à fournir un système de passage de câbles amélioré et, en particulier, un système qui assure une protection fiable des câbles sans procurer de gêne dans l'utilisation courante du véhicule lors des pivotements de la portière, et de plus sans complication du montage de ce système sur le véhicule lors de la fabrication.

Avec ces objectifs en vue, l'invention a pour objet un système de passage de câblage entre la caisse et une portière d'un véhicule automobile, du type comportant les caractéristiques de la revendication 1.

Le système selon l'invention permet donc d'assurer le guidage et la protection des câbles entre la caisse de la voiture et une portière, même lorsque le débattement entre les extrémités de la gaine liées respectivement à la dite caisse et à la portière est relativement important, et sans cependant générer un encombrement accru entre le chant de la portière et la paroi de la caisse en regard. En effet, comme on l'aura déjà compris, la partie extensible axialement de la gaine agit comme un soufflet dont la longueur peut varier considérablement, les variations de longueur étant compensées, au niveau des câbles, par la longueur libre qui leur est laissée à l'intérieur de la porte pour pouvoir coulisser librement dans la gaine, dans sa partie la plus proche de la portière.

Selon une disposition particulière de l'invention, la partie extensible axialement est annelée et a une forme générale conique, s'évasant du côté de la portière.

Cette disposition particulière facilite les déformations axiales de la gaine tout en améliorant son retour en position compressée lors de la fermeture de la portière, et l'évasement du côté de la portière facilite également le coulissement du câblage à l'intérieur de la gaine.

Cette disposition vise à permettre l'utilisation d'une même gaine quel que soit son emplacement, par exemple du côté droit ou du côté gauche du véhicule, alors que les implantations des découpes de passage de câble dans la caisse du véhicule ne sont pas nécessairement au même niveau des deux côtés du véhicule, ou nécessiteraient des gaines symétriques, donc différentes, pour le côté droit et pour le côté gauche, comme on le comprendra mieux par la suite. La partie déformable en flexion, mais qui reste statique une fois la gaine liée à la caisse du véhicule, permet en fait d'adapter la forme de la gaine entre la découpe de passage de câble dans la paroi de la caisse et un point fixe de cette même paroi, où est fixée l'extrémité de la partie extensible

Préférentiellement encore, l'extrémité de la gaine raccordée sur la caisse est constituée par un premier élément de connexion d'un connecteur électrique adapté pour être raccordé sur un deuxième élément de connexion du connecteur qui est fixé à demeure sur la paroi de la caisse.

Cette disposition permet en fait, lors de la construction de la voiture, de préparer le câblage de la portière séparément de celui du véhicule, et de fixer sur la dite portière la gaine contenant le dit câblage, puis de relier électriquement ce câblage au circuit électrique du véhicule, de manière très simple grâce au connecteur, au moment du montage de la portière sur la caisse du véhicule.

Selon une autre disposition préférentielle, l'extrémité de la partie déformable axialement est fixée sur la paroi de la caisse par un organe de fixation liant rigidement une bride solidaire de la gaine à la paroi de la caisse.

Cette disposition facilite la réalisation des moyens de fixation de la dite partie extensible sur la caisse, la bride pouvant notamment être formée d'une pièce avec la gaine, lors du moulage de celle-ci

Selon d'autres dispositions particulières :
- l'organe de fixation est fixé sur la paroi de la caisse par emmanchement élastique. Il s'agit alors d'une sorte de "clips" qui peut être fixé sur la paroi de la caisse par un simple encliquetage, facilitant grandement le montage de la dite gaine.
- l'organe de fixation est un cavalier qui enserre la gaine, deux pattes du cavalier passant dans des trous respectifs de la bride avant de se clipser dans la paroi de la caisse.
- l'extrémité de la gaine du côté de la portière comporte une rainure qui s'encastre sur le bord de l'orifice de passage ménagé dans paroi de chant de portière pour maintenir la gaine fixée de manière étanche sur la dite paroi de chant.
- les câbles sortant de la gaine du côté portière coulissent librement dans la partie déformable axialement de la gaine et sont fixés à l'intérieur de la portière avec un brin libre suffisant entre le point de fixation dans la portière et l'extrémité de la gaine fixée sur la portière pour autoriser un allongement de la gaine sans traction sur les câbles lors de l'ouverture de la portière.

L'invention a aussi pour objet un véhicule automobile comportant au moins une portière équipée d'organes électriques, caractérisé en ce qu'il comporte entre la dite portière et sa caisse un système de passage de câblage tel que défini ci-dessus.

D'autres caractéristiques et avantages apparaîtront dans la description qui va être faite d'un véhicule automobile comportant un système de passage de câblage conforme à l'invention.

On se reportera aux dessins annexés dans lesquels :
- la figure 1 est une représentation latérale du véhicule, montrant la localisation du système entre un pied-milieu et une portière arrière,
- la figure 2 est une vue de détail en coupe selon la ligne 2-2 de la figure 1, lorsque la portière est fermée,
- la figure 3 est une vue correspondante lorsque la portière est ouverte,
- la figure 4 est une vue des moyens de fixation de la gaine sur le pied-mileu, avant leur mise en place.

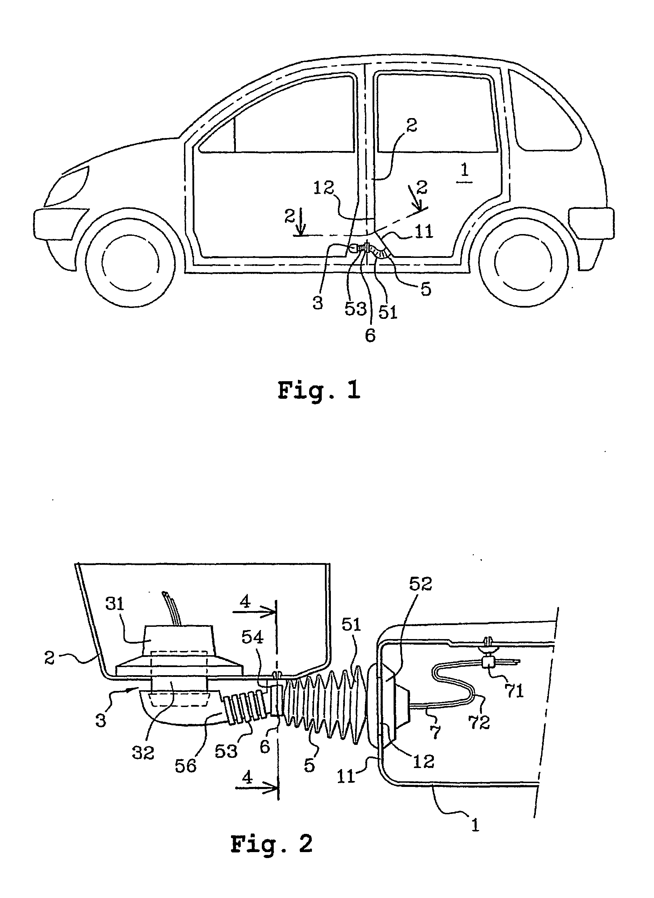

Sur le dessin de la figure 1, on a représenté un véhicule vu du côté gauche, comportant deux portières latérales, dont les contours sont représentés en traits mixtes, alors que les ouvertures de la caisse constituant les entrées de portes sont représentées en traits pleins.

On va maintenant décrire un système selon l'invention, utilisé comme passage de câble entre la porte arrière 1 et le montant central, ou "pied-milieu" 2 de la caisse. Ce système comprend essentiellement une gaine 5 en caoutchouc moulé qui relie le bas du pied milieu à une partie inférieure inclinée 11 du chant 12 de la porte.

La gaine 5 comporte une partie extensible axialement 51, qui est annelée et de forme générale conique, l'extrémité de plus grand diamètre de cette partie étant raccordée de manière étanche sur la paroi de la partie inclinée 11 du chant de porte par engagement d'une collerette annulaire 52 dans une découpe 12 de la tôle de porte réalisée à cet effet, de manière classique pour un passage de câble.

La gaine 5 comporte une deuxième partie 53, d'une pièce avec la première partie 1 et en prolongement de celle-ci du côté de plus petit diamètre.

Une découpe est réalisée en partie inférieure du pied-milieu, cette découpe recevant un deuxième élément de connexion 31 d'un système de connexion électrique 3, de type connu en soi, par exemple un connecteur à languettes, dont le premier élément 32 est lié à l'extrémité 56 de la deuxième partie 53 de la gaine et se raccorde sur le deuxième élément de connexion 31 par emboîtement et verrouillage élastique.

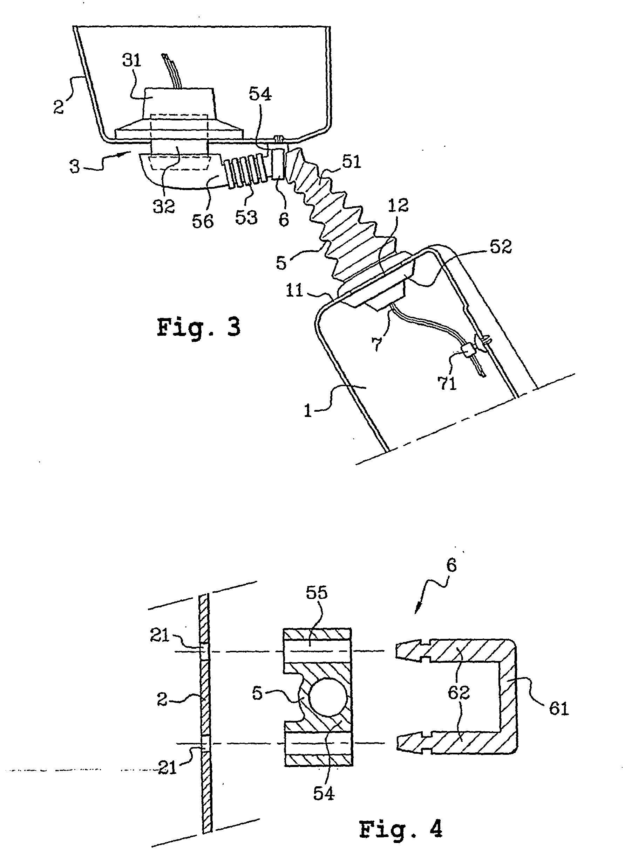

La deuxième partie 53 de gaine est statique dès que la gaine est fixée sur le pied-milieu par un organe de fixation 6 situé entre les deux parties 51 et 53 de la gaine et solidarisé sur la paroi en tôle du pied-milieu. Comme on le voit figure 4, l'organe de fixation comprend une partie en forme de bride 54 formée d'une pièce par moulage avec la gaine. Un cavalier 61 en forme de U vient serrer la bride 54 contre le pied-milieu, les deux branches 62 du cavalier passant dans des trous 55 de la dite bride et comportant à leurs extrémités des verrous élastiques qui s'engagent dans des trous correspondants 21 du pied-milieu 2.

Préférentiellement, comme représenté sur les figures, la deuxième partie 53 de la gaine est également réalisée en caoutchouc moulé et annelée, de manière à être déformable essentiellement en flexion. Comme on le voit figure 1, le système de connexion 3 n'est pas situé à la même hauteur que l'organe de fixation 6. De l'autre côté du véhicule, le même décalage existe, mais de manière symétrique, ce qui conduirait à devoir utiliser pour les deux côtés du véhicule des gaines ayant des formes générales symétriques par rapport au plan médian longitudinal vertical du véhicule, et donc des formes différentes. Grâce à la capacité de déformation en flexion de la dite deuxième partie de la gaine, on peut en fait utiliser la même gaine pour les deux côtés du véhicule, et de plus la même gaine peut aussi être utilisée en cas de légères variations de la position relative du système de connexion 3 et de l'organe de fixation 6, par exemple pour différents types de véhicules. Ceci permet donc finalement de réduire le nombre de gaines différentes à fabriquer.

La préparation et le montage du passage de câble s'effectuent comme suit :

Lors de la préparation de la portière, les câbles du faisceau électrique 7 sont reliés, de manière connue en soi, à l'élément de connecteur 32, passent dans la gaine 5 et en débouchent du côté de la collerette 52, d'où ils sont reliés, à l'intérieur de la porte, aux organes électriques concernés. Le faisceau de câbles 7 est fixé sur une paroi de la porte 1 par une agrafe plastique 71 ou similaire, de manière à former une boucle 72 libre de se déformer comme on va le voir par la suite.

Lors du montage de la porte sur le véhicule, l'élément de connecteur 32 est connecté sur l'élément fixe 31, et la bride 54 est fixée sur le pied-milieu par le cavalier 61.

Lorsque la porte est fermée, la première partie 51 de la gaine a une longueur réduite et le faisceau de câble forme la boucle 72 dans la portière, comme représenté figure 2.

Lorsque la porte est ouverte, comme représenté figure 3, la partie inclinée 11 du chant de la porte s'éloigne du pied milieu 2, provoquant un allongement de la première partie 51 de la gaine. Le faisceau de câbles 7 reste fixe dans la deuxième partie 53 de la gaine, mais coulisse dans la première partie 51 lors de son allongement, la boucle 72 se résorbant, ainsi qu'on le voit clairement sur la figure 3.

Lorsque l'on referme la porte, la partie 51 se replie sur elle-même à la manière d'un soufflet, aidée en cela par sa forme conique, et la partie du faisceau de câble qui avait précédemment coulissé à l'intérieur de la gaine en ressort, poussée par la partie maintenue fixement dans la partie fixe 53 de la gaine, le faisceau ayant en soi une rigidité suffisante pour résister au flambement dans la gaine, et étant aidé en cela par le guidage que la gaine lui offre jusqu'au niveau de la collerette 52.

L'invention n'est pas limitée au mode de réalisation qui vient d'être décrit uniquement à titre d'exemple. En particulier, l'organe de fixation de la gaine sur la caisse et le connecteur électrique pourront être réalisés de toute autre manière adéquate, permettant de déterminer un point fixe de la gaine sur la caisse et d'assurer une liaison étanche de la dite gaine avec la paroi de la caisse sur laquelle ils sont fixés. Le système selon l'invention peut bien sûr être aussi utilisé pour la liaison entre la caisse du véhicule et d'autres portes qu'une porte arrière.

## Revendications

1. Système de passage de câblage entre la caisse et une portière (1) d'un véhicule automobile, du type comportant une gaine souple (5) dans laquelle les câbles électriques (7) passent et dont les extrémités sont raccordées respectivement sur une paroi de chant (11) de la portière et sur une paroi fixe (2) de la caisse, la dite gaine comportant une partie extensible axialement (51), dont une extrémité (54) est fixée sur la caisse et l'autre extrémité (52) liée à la paroi de chant de la portière sur le bord d'un orifice (12) de passage des câbles ménagé dans la dite paroi de chant, de manière que la dite partie extensible (51) de gaine s'allonge lorsque la portière (1) est ouverte,
**caractérisé en ce que** la gaine (5) se prolonge au-delà de l'extrémité de la partie déformable axialement qui est fixée sur la caisse, par une partie (53) déformable en flexion dont l'extrémité (56) est raccordée sur la caisse au niveau du passage des câbles dans la paroi de la caisse, et les câbles ont une longueur libre (72) à l'intérieur de la portière telle qu'ils peuvent coulisser dans la dite gaine pour absorber les variations de longueur de celle-ci lors du pivotement de la portière.

2. Système de passage de câblage selon la revendication 1, **caractérisé en ce que** la partie extensible axialement (51) est annelée et a une forme générale conique, s'évasant du côté de la portière.

3. Système de passage de câblage selon l'une des revendications 1 et 2, **caractérisé en ce que** l'extrémité (56), raccordée sur la caisse, de la partie (53) déformable en flexion de la gaine, est reliée à un premier élément de connexion (32) d'un connecteur électrique (3) adapté pour être raccordé sur un deuxième élément de connexion (31) du connecteur qui est fixé à demeure sur la paroi (2) de la caisse.

4. Système de passage de câblage selon l'une des revendications 1 à 3, **caractérisé en ce que** l'extrémité de la partie déformable axialement (51) est fixée sur la paroi (2) de la caisse par un organe de fixation (6) liant rigidement une bride (54) solidaire de la gaine à la paroi (2) de la caisse.

5. Système de passage de câblage selon la revendication 4, **caractérisé en ce que** la bride (54) est formée d'une pièce avec la gaine (5).

6. Système de passage de câblage selon la revendication 4, **caractérisé en ce que** l'organe de fixation (6) est fixé sur la paroi de la caisse par emmanchement élastique.

7. Système de passage de câblage selon la revendication 4, **caractérisé en ce que** l'organe de fixation est un cavalier (61) qui enserre la gaine (5), deux pattes (62) du cavalier passant dans des trous (55) respectifs de la bride avant de se clipser dans la paroi de la caisse.

8. Système de passage de câblage selon la revendication 4, **caractérisé en ce que** l'extrémité de la gaine du côté de la portière comporte une rainure qui s'encastre sur le bord de l'orifice (12) de passage ménagé dans la paroi de chant (11) de portière pour maintenir la gaine fixée de manière étanche sur la dite paroi de chant.

9. Système de passage de câblage selon la revendication 4, **caractérisé en ce que** les câbles (7) sortant de la gaine du côté portière coulissent librement dans la partie déformable axialement (51) de la gaine (5) et sont fixés à l'intérieur de la portière avec un brin libre (72) suffisant entre le point de fixation (71) dans la portière et l'extrémité de la gaine fixée sur la portière pour autoriser un allongement de la gaine sans traction sur les câbles lors de l'ouverture de la portière.

10. Véhicule automobile comportant au moins une portière (1) équipée d'organes électriques **caractérisé en ce qu'**il comporte un système de passage de câblage selon l'une des revendications précédentes.

## Claims

1. A system for ducting cabling between the bodywork and a door (1) of an automobile vehicle, of the type comprising a flexible sheath (5) through which the electrical cables (7) pass and whose ends are connected respectively to an edge wall (11) of the door and to a fixed wall (2) of the bodywork, this sheath comprising an axially extensible portion (51), one end (54) of which is secured to the bodywork and the other end (52) of which is connected to the edge wall of the door on the edge of an opening (12) provided in this edge wall for the passage of the cables so that the extensible sheath portion (51) is elongated when the door (1) is open, **characterised in that** the sheath (5) is prolonged beyond the end of the axially deformable portion which is secured on the bodywork by a portion (53), which may be deformed by bending, whose end (56) is connected to the bodywork at the location at which the cables pass into the wall of the bodywork, and the cables have a free length (72) within the door such that they can slide in the sheath to absorb its length variations during pivoting of the door.

2. A cable ducting system as claimed in claim 1, **characterised in that** the axially extensible portion (51) is annulate and has a generally conical shape flaring out towards the door.

3. A cable ducting system as claimed in one of claims 1 and 2, **characterised in that** the end (56) of the portion (53) of the sheath connected to the bodywork which may be deformed by bending is connected to a first coupling member (32) of an electrical connector (3) adapted to be connected to a second coupling member (31) of the connector which is permanently secured on the wall (2) of the bodywork.

4. A cable ducting system as claimed in one of claims 1 to 3, **characterised in that** the end of the axially deformable portion (51) is secured to the wall (2) of the bodywork by a fastening member (6) rigidly connecting a flange (54) rigid with the sheath to the wall (2) of the bodywork.

5. A cable ducting system as claimed in claim 4, **characterised in that** the flange (54) is formed in one piece with the sheath (5).

6. A cable ducting system as claimed in claim 4, **characterised in that** the fastening member (6) is secured on the wall of the bodywork by elastic fitting.

7. A cable ducting system as claimed in claim 4, **characterised in that** the fastening member is a bracket (61) which clamps the sheath (5), two arms (62) of the bracket passing into respective holes (55) of the flange before being clipped to the wall of the bodywork.

8. A cable ducting system as claimed in claim 4, **characterised in that** the end of the sheath on the door side comprises a groove which is fitted on the edge of the passage opening (12) provided in the edge wall (11) of the door so as to keep the sheath secured in a leak-tight manner on this edge wall.

9. A cable ducting system as claimed in claim 4, **characterised in that** the cables (7) emerging from the sheath on the door side slide freely in the axially deformable portion (51) of the sheath (5) and are secured within the door with a sufficient free section (72) between the point (71) of fastening to the door and the end of the sheath secured on the door so that the sheath can be elongated without any traction on the cables when the door is being opened.

10. An automobile vehicle comprising at least one door (1) fitted with electrical members, **characterised in that** it comprises a cable ducting system as claimed in one of the preceding claims.

## Patentansprüche

1. System zur Durchführung einer Verkabelung zwischen der Karosserie und einer Tür (1) eines Krattfahrzetrgs von der Art, welches eine nachgiebige Hülle (5) aufweist, in welcher die elektrischen Kabel (7) hindurchgehen und deren Enden jeweils an einer Schmalseitenwand (11) der Tür und an einer festen Wand (2) der Karosserie verbunden sind, wobei die Hülle einen axial dehnbaren Teil (51) aufweist, von dem ein Ende (54) an der Karosserie befestigt ist und das andere Ende (52) mit der Schmalseitenwand der Tür auf dem Rand einer Öffnung (12) für den Durchgang von Kabeln verbunden ist, die in der Schmalseitenwand derart angeordnet ist, dass der dehnbare Teil (51) der Hülle sich dehnt, wenn die Tür (1) offen ist,
**dadurch gekennzeichnet, dass** die Hülle (5) über das Ende des axial verformbaren Teils, welches an der Karosserie befestigt ist, durch einen biegeverfonnbaren Teil (53) verlängert ist, dessen Ende (56) an der Karosserie auf Höhe des Durchgangs der Kabel in der Wand der Karosserie verbunden ist, und die Kabel eine freie Länge (72) im Inneren der Tür derart aufweisen, dass sie in der Hülle gleiten können, um die Längenvariationen von dieser beim Schwenken der Tür aufzunehmen.

2. System zur Durchführung einer Verkabelung nach Anspruch 1, **dadurch gekennzeichnet, dass** der axial dehnbare Teil (51) ringförmig ist und eine im Allgemeinen konische Form aufweist, die auf Seiten der Tür erweitert ist.

3. System zur Durchführung einer Verkabelung nach einem der Ansprüche 1 und 2, **dadurch gekennzeichnet, dass** das mit der Karosserie verbundene Ende (56) des biegeverformbaren Teils (53) der Hülle mit einem ersten Verbindungselement (32) eines elektrischen Steckers (3) verbunden ist, der angepasst ist, um an einem zweiten Verbindungselement (31) des Steckers angeschlossen zu werden, welches fest an der Wand (2) der Karosserie befestigt ist.

4. System zur Durchführung einer Verkabelung nach einem der Ansprüche 1 bis 3, **dadurch gekennzeichnet, dass** das Ende des axial verformbaren Teils (51) an der Wand (2) der Karosserie durch ein Befestigungsbauteil (6) befestigt ist, welches einen Flansch (54), der fest mit der Hülle verbunden ist, starr mit der Wand (2) der Karosserie verbindet.

5. System zur Durchführung einer Verkabelung nach Anspruch 4, **dadurch gekennzeichnet, dass** der Flansch (54) aus einem Stück mit der Hülle (5) gebildet ist.

6. System zur Durchführung einer Verkabelung nach Anspruch 4, **dadurch gekennzeichnet, dass** das Befestigungsbauteil (6) an der Wand der Karosserie durch elastisches Einpressen bzw. Einstecken befestigt ist.

7. System zur Durchführung einer Verkabelung nach Anspruch 4, **dadurch gekennzeichnet, dass** das Befestigungsbauteil eine U-förmige Steckverbindung (61) ist, welche die Hülle (5) umschließt, wobei zwei Laschen (62) der U-förmigen Steckverbindung durch jeweilige Löcher (55) des Flansches hindurchgehen, bevor sie in der Wand der Karosserie eingeklipst werden.

8. System zur Durchführung einer Verkabelung nach Anspruch 4, **dadurch gekennzeichnet, dass** das Ende der Hülle auf Seiten der Tür eine Nut aufweist, die an dem Rand der Durchgangsöffnung (12) eingespannt wird, die in der Schmalseitenwand (11) der Tür angeordnet ist, um die Hülle auf dichte Art und Weise an der Schmalseitenwand zu halten.

9. System zur Durchführung einer Verkabelung nach Anspruch 4, **dadurch gekennzeichnet, dass** die Kabel (7), welche aus der Hülle auf Seiten der Tür herauskommen, frei in dem axial verformbaren Teil (51) der Hülle (5) gleiten und im Inneren der Tür mit einem ausreichenden freien Stück (72) zwischen dem Befestigungspunkt (71) in der Tür und dem Ende der Hülle, welches an der Tür befestigt ist, befestigt sind, um eine Streckung der Hülle ohne ein Ziehen an den Kabeln während der Öffnung der Tür zu erlauben.

10. Kraftfahrzeug, welches mindestens eine Tür (1) aufweist, die mit elektrischen Bauteilen ausgestattet ist, **dadurch gekennzeichnet, dass** es ein System zur Durchführung einer Verkabelung nach einem der vorangegangenen Ansprüche aufweist.
